# EUROPEAN PATENT SPECIFICATION

(11) **EP 3 428 686 B1**
(45) Date of publication and mention of the grant of the patent: **13.03.2024**
(21) Application number: 17181436.1
(22) Date of filing: 14.07.2017
(51) Int. Cl.: G01S 17/42, G01S 7/499, G01S 17/931, G01S 17/89, G01S 7/48, G01S 7/481, G01S 7/487

(54) **A VISION SYSTEM AND METHOD FOR A VEHICLE**
SICHTSYSTEM UND -VERFAHREN FÜR EIN FAHRZEUG
SYSTÈME DE VISION ET PROCÉDÉ POUR VÉHICULE

(43) Date of publication of application: 16.01.2019
(73) Proprietor: Veoneer Sweden AB, 447 83 Vårgårda (SE); Beamagine S.L., 08755 Castellbisbal (ES)
(72) Inventor: ROYO, Santiago, 08755 Castellbisbal (ES); RIU, Jordi, 08660 Balsareny (ES); RODRIGO, Noel, 25005 Lleida (ES); SANABRIA, Ferran, 08912 Badalona (ES); KÄLLHAMMER, Jan-Erik, 582 46 Linköping (SE)
(74) Representative: Müller Verweyen

(56) References cited:
- EP-A1- 2 957 926
- DE-A1-102005 049 471
- DE-B4-102005 049 471
- US-A- 5 703 639
- US-A1- 2007 216 769

## Description

The invention relates to a vision system for a vehicle comprising an optical unit and a data processing device, said optical unit comprising a light source arranged on an emitting side adapted to emit a light beam to a scanned surface in the environment of the vehicle, at least one light deflection device arranged on a receiving side comprising an array of light deflection elements, wherein each light deflection element is adapted to redirect light which is incident on said light deflection element from the scanned surface, and to change the direction of the redirected light between at least a first deflection direction and a second deflection direction, a light sensing device arranged on the receiving side to sense light redirected from the light deflection device in said first deflection direction, said data processing device being adapted to process the data provided by said light sensing device.

Such systems are generally known, for example from WO 2012 123809 A1 and WO 2014 125153 A1. Herein, a surface is illuminated by a light beam that originates from a light source and is reflected by the surface. The reflected light beam is incident on a light deflection device where it is deflected in a specific manner to either a light sensing device or to an absorber. The time-of-flight of the light beam is indicative of the distance between the system and a point on the surface, which spatial location is derivable from information on the light deflection device and by the time-of-flight.

Generally, light scattering may disturb the light sensing device's function. The presence of an absorber within the optical unit yields a reduction of such light scattering. However, in addition to the reflected light beam incident on and sensed by the light sensing device, background light from the environment is also incident on and sensed by the light sensing device leading to noise, a decrease of the signal-to-noise ratio, or biased sensing. The light sensing capabilities are influenced differently by background light when the vehicle is driven at night leading to low background light or at day time leading to considerable background illumination. The possibility of strongly varying background illumination, for example when entering or leaving a tunnel, can cause a low signal-to-noise ratio of the acquired data or the light sensing device to be under- or overloaded. Furthermore, the light beam can saturate the light sensing device and generate a considerable downtime during which no sensing can be performed. The system with the light sensing device and a data processing device needs to be improved with regard to the signal-to-noise ratio, the measurement frequency, and to the handling of background light.

US 2007/0216769 A1 discloses a vision system for a vehicle according to the preamble of claim 1.

The object of the invention is to provide a vision system and a vision method where a disadvantageous influence of background radiation entering the optical unit on the light sensing device is reduced.

The invention solves this problem with the features of the independent claims. The system according to the present invention comprises a light intensity measurement section arranged to perform radiometric measurement of background light entering the optical unit, yielding an overall background light intensity value, and the data processing device is adapted to control the light deflection device and/or the light sensing device based on the radiometric measurement from the light intensity measurement section.

According to the invention, the light intensity measurement section that is arranged to perform radiometric measurement of background light entering the optical unit, yielding an overall background light intensity value, allows the acquisition and use of the information comprised in the background light. The radiometric measurement section is adapted to perform radiometric measurement for estimation of the intensity level of background light in the scene. The intensity level of the background radiation is an integrated intensity value which does not comprise image information. By radiometric measurement the vision system provides means to estimate environment conditions, i.e., whether the vehicle is driven in full daylight, night, when entering a shadow region, or any other condition leading to different ambient/background light.

Another aspect of the invention is that the data processing device is adapted to control the light deflection device and/or the light sensing device based on the radiometric measurement from the light intensity measurement section. The data processing device is able to detect varying background illumination and react appropriately in order to improve the signal-to-noise ratio and/or to coordinate the light deflection device and/or the light sensing device according to the intensity of the incident light.

The invention is applicable to any kind of vehicles, in particular motor vehicles and non-motorized vehicles, like cars, drones, boats, trains, airplanes and so on.

In a preferred embodiment the light intensity measurement section is adapted to perform the radiometric measurement on background light lying outside the area of a light beam portion directly reflected by the surface. In this embodiment, data on the background light and the light beam portion can be acquired separately allowing a reliable radiometric measurement of the background light and an advantageous control of the light deflection device and/or the light sensing device based on the radiometric measurement.

In a preferred embodiment, the light intensity measurement section is separate from said light sensing device. This embodiment is particularly advantageous as at least simultaneous radiometric measurements by the light intensity measurement section and light sensing by the light sensing device are possible. The separate light intensity measurement section preferably comprises a light intensity measurement sensor separate from the light sensing device. The light intensity measurement section is preferably adapted to perform reliable radiometric measurements of the background light only. For example, the light beam and reflected and scattered portions thereof could preferably be excluded, e.g. if the light intensity measurement section preferably is equipped with a filter adapted to filter the light corresponding to the light beam emitted by the light source.

However, it is also possible that the light intensity measurement section is formed by at least part of the light sensing device. In this embodiment no additional physical sensors or detectors are necessary to realize the radiometric measurement. The light intensity measurement section comprises in this embodiment at least one sensor comprised in the light sensing device, which receives light from deflection elements directing light in the first deflection direction. For example, a dump element for scatter reduction or a light detecting device for imaging purposes could preferably be positioned in the second deflection direction.

According to the invention the light intensity measurement section is arranged to sense light redirected from the light deflection device in the second deflection direction. By means of optical systems, for example lenses, prisms, prism arrangements, Risley prisms, beam splitters, optical beam dividers, etc., the the light beam portion incident on the light deflection device forms a spot and/or an area on the deflection device. The spot is formed on a group of deflection elements directing said directly reflected light beam towards the light sensing device. The remaining deflection elements, on which the light beam portion is not directly incident, can be adapted to direct background light towards the light intensity measurement section in the second deflection direction. The radiometric measurement is preferably performed on background light lying outside the spot and/or area of the directly reflected light beam, in order to measure the signal, intensity, and/or other radiometric properties of the background light only, i.e., separate from the light beam portion directly reflected by the surface.

If the light deflection elements can deflect light in the first deflection direction and the second deflection direction only, light is in this embodiment either directed towards the light sensing device or to the light intensity measurement section. In this embodiment, when the light beam portion only is deflected towards the light sensing device background light only is deflected towards the light intensity measurement section. This allows a particularly reliable measurement of the background and/or ambient light.

It is also possible that outside the subject-matter of the claims the light intensity measurement section is arranged outside the light beam portion redirected from the light deflection device in the second deflection direction. In one embodiment the light intensity measurement section is arranged independently of the light beam redirected from the light deflection device in any direction. This allows a variable positioning of the light intensity measurement section in the vision system, e.g., within the optical unit, outside the optical unit, and/or on the casing of the optical unit. Within the optical unit, the light intensity measurement section could, for example, be fed with light by a beam splitter and/or optical path division device. In another embodiment not encompassed by the wording of the claims, each deflection element of the light deflection device is adapted to change the direction of the redirected light between at least first deflection direction, a second deflection direction, and a third deflection direction, and the light intensity measurement section is arranged to sense light deflected in the third deflection direction.

Advantageously, the data processing device is adapted to maximize the signal-to-noise ratio of the data provided by the light sensing device based on the radiometric measurement from the light intensity measurement section. Based on the radiometric measurement of the background light, the background light level is known and the data processing device can be adapted to schedule operations to control the light sensing device or the deflection device advantageously. The radiometric measurement could preferably be used to modify the deflection of the light beam portion by the deflection device to enable an optimal signal-to-noise ratio, or to adjust the spatial resolution or the frame rate.

An enduring saturation of the light sensing device could for example imply unnecessary downtime, which could result in hazardous situations for the vehicle, as the sensor becomes inoperative. This could be avoided when appropriate deflection elements are arranged to deflect light towards a direction other than towards the light sensing device, e.g., towards the second deflection direction. Another solution could be to adjust the sensitivity of the light sensing device based on the radiometric measurements, in particular by adjusting the light sensing device to a lower sensitivity in case the directly reflected light beam is incident on the light sensing device. This aspect could be particularly advantageous in case of single photon light sensing devices, like single photon avalanche photodiodes (SPAD), SPAD arrays or photomultiplier tubes.

If, for example, the signal-to-noise ratio of a measurement of the directly reflected light beam by the light sensing device is low, more deflection elements nearby the zero-order spot could preferably be arranged to direct light towards the light sensing device in order to increase the portion of the light beam towards the light sensing device, in this way increasing to signal-to-noise ratio. It can also be preferred to arrange less deflection elements nearby the zero-order spot to direct light towards the light sensing device in order to decrease the amount of background light towards the light sensing device, in this way also increasing to signal-to-noise ratio.

In a preferred embodiment the data processing device is adapted to reduce the downtime between successive measurements of the light sensing device based on the radiometric measurement from the light intensity measurement section. The data processing device is preferably adapted to control the sensing device and/or the deflection device so that detection and/or processing of the background light is minimized and/or avoided in order to decrease the downtime during which no measurement and/or processing can be performed. Preferably, the downtime is decreased by avoiding saturation of the sensing device or by adapting the deflection device so that the number of deflection elements deflecting light towards to deflection device is reduced, or by active quenching.

Preferably, the vision system comprises a light detecting device adapted to capture image data. The light detecting device preferably provided in addition to the light sensing device allows an improved data acquisition. Preferably, the light detecting device could replace a dump element and could be arranged to detect light that is directed in the second deflection direction. In this embodiment, light that enters the vision system and that is not directed to the light sensing device is not dumped and the corresponding information is destroyed in the dump element, but recorded by the detection device to gain additional information on the vehicle environment. The additional light detecting device can deliver information to the data processing device that is in complementary to the data by the light sensing device. The light detecting device could also be positioned independent of light that is incident on the light deflection device. The light detecting device is adapted to advantageously adjust the exposure time or exposure value of the image sensor of the light detecting device, in particular based on the radiometric measurement from the light intensity measurement section. Here, image sensor includes polarimetric and RGB imaging.

In embodiments comprising a light detecting device, the light intensity measurement section preferably is formed by the light detecting device. This could for example be realized by integrating the pixel intensities of images provided by the light detecting device, yielding the radiometric light intensity of the invention.

Advantageously, the data provided by the light sensing device and by the light detecting device is processed by the data processing device combined manner to allow improved handling of the processed data, e.g., the results of the combined data can be used to control a driver assistance device and/or to control the vision system itself, for example, to optimize the measurement frequency, the exposure time, and/or the signal-to-noise ratio.

In a preferred embodiment, the data processing device is adapted to control the light detecting device and/or to coordinate the light detecting device with the deflection device on the basis of the radiometric measurement from the light intensity measurement section. In this embodiment, the light detecting device could preferably be controlled and/or coordinated with the deflection device to acquire image data adapted to the illumination of the environment. This preferred adaption could for example avoid (over-) saturation of the captured image if the background light is strong, but enhance saturation to yield optimal low-intensity images.

The coordination of the light detecting device with the deflection device on the basis of the radiometric measurement from the light intensity measurement section is particularly advantageous if the light detecting device is arranged to detect light that is redirected in the second deflection direction by the deflection device. In this embodiment, the incident light beam only could be directed towards the first deflection direction but the remaining incident light could be directed towards the second deflection direction allowing imaging of the environment by the light detecting device.

For optimal background detection, the data processing device is preferably adapted to adjust sensing and/or data evaluation strategies to improve the sensitivity and/or handling of retro-reflected beams, for example by spatial arrangements removing direct glare or stray light, and/or searching and compensating for/removing particular areas in the image.

It is advantageous if the light source, the light sensing device, and the data processing device form a LIDAR system adapted to measure time-of-flight values. The time-of-flight is the runtime of the light beam and/or a portion of a light beam from the light source via reflection by the scanned surface in the vehicle's environment, until sensing by the light sensing device in the vision system. The time-of-flight corresponds to the distance between the vision system and the scanned surface, which is estimated or computed by the data processing device.

Preferably, the light intensity measurement section is adapted to acquire optical data in different spectral bands and/or with different imaging techniques, and/or the vision system is adapted to perform polarimetric imaging.

For example, filters could allow for different measurements of properties of the incident light. A combination of optical systems, comprising lenses, prisms, mirrors and/or filter, etc., for light path division or splitting and/or deflection may be preferably connected to the light intensity measurement section to acquire optical data in certain spectral bands, for given incident polarizations, and/or for combining different imaging, time-of-flight measurements, and/or other data acquisition techniques.

Advantageously, the light intensity measurement section is adapted to acquire optical data in different spectral bands and/or with different imaging techniques. A plurality of measurement portions comprised in the light intensity measurement section is particularly advantageous if light in different spectral bands is to be recorded and/or if different optical techniques are to be applied. The measurement portions can comprise CCD/CMOS sensor, arrays thereof, or focal plane array (FPA) sensors. Arrays of such sensors can be line arrays or matrices. Also a single detection element can be advantageous as the rasterization can be performed by the deflection device.

Preferably, the vision system is adapted to perform polarimetric imaging. Polarimetric imaging and/or data acquisition can enhance the performance of LIDAR imaging and/or can be used to deal with bad weather conditions such as fog, rain, dust, and/or snow. Preferably, the light intensity measurement section and/or the light detecting device comprises a polarimeter to measure the degree of depolarization of the laser beam and/or to use polarimetric information to interrogate complementary information from the scanned surface. Polarimetric information could for example be acquired with a common light detecting device together with at least one polarization filter. In particular, but not limited to, the road condition, the intensity of fog, rain, dust, and/or snow and/or the relevance thereof to the LIDAR could be extracted or estimated from this information.

In a preferred embodiment the light sensing device and/or the light detecting device comprises PIN photo diodes, avalanche photo diodes, photomultiplier tubes, single photon avalanche diodes, or an array of any of the aforementioned, and/or are adapted to detect light in the range of UV, near infrared, short/mean/long wavelength infrared, and/or sub-mm/THz band, preferably wideband visible, and near infrared or short wavelength infrared. Sensors for LIDAR can be PIN photo diodes, avalanche photo diodes, single photon avalanche diodes and photomultiplier tubes, either based on Silicon or InGaAs technologies. Also arrays of the aforementioned devices can be comprised in the light sensing device. The radiometric measurement could preferably be used to modify the responsivity of the light sensing device to enhance stability, frame rate, and/or other features of the light sensing device.

Advantageously, the control unit is adapted to perform quenching of an avalanche photo diode comprised in the light sensing device based on the radiometric measurement from the light intensity measurement section. This embodiment is particularly advantageous to decrease the downtime between successive measurements of the light sensing device. By passive and/or active quenching, avalanche photo diodes comprised in the light sensing device can be brought into a state capable of sensing a successive signal.

In the following the invention shall be illustrated on the basis of preferred embodiments with reference to the accompanying drawings as non-limiting cases, wherein:
- Fig. 1: shows a schematic view of a vision system;
- Fig. 2: shows a vision system according to an embodiment of the invention;
- Fig. 3: shows a scanning scheme according to an embodiment of the invention; and
- Figs. 4-6: show potential measurement results.

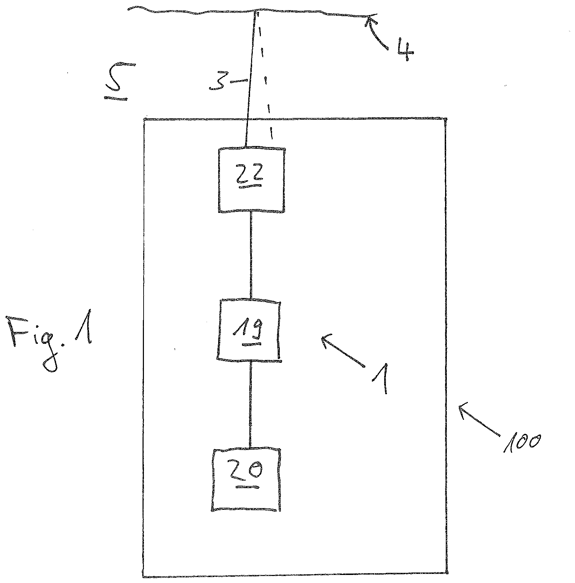

According to figure 1, the vision system 1 is mounted in/on a vehicle 100, to capture images of a scanned surface 4 in the environment 5 of the vehicle 100. The vision system 1 comprises an optical unit 22 and a data processing unit 19. The vision system 1 can further include other detection system and/or sensors such as radar or other cameras.

The optical system comprises a light source 2 that is adapted to emit a light beam 3, which is preferably directed by an optical system within the optical unit 22 and through a first lens system 10 towards the environment 5 of the vehicle 100. The light beam 3 eventually interacts with the environment 5, in particular the scanned surface 4 or dust, snow, rain, and/or fog in the environment 5, where the light beam 3 is reflected and a reflected portion of the light beam 3 enters the optical system 22, preferably through a second lens system 11. The light beam 3 emitted by the light source 2 is incident on and reflected by the scanned surface 4 and the reflected light beam portion contains the signal to be sensed. In addition to the reflected portion of the light beam 3, other light from the environment 5 enters the optical unit 22, preferably through the second lens system 11. The light from the environment 5 contains background light and/or ambient light that is incident in the optical unit 22 could be a basis for the radiometric measurement, considered as noise, and/or used for imaging purposes.

The driver assistance system 20 is able to trigger defined driver assistance action to assist the driver, e.g. braking, acceleration, steering, showing information etc., based on the data provided by the data processing device 19. In the embodiment shown in figure 1, the vision system 1 comprises a single optical unit 22 mounted for example in the front part of a vehicle 1 and directed for example towards the front of the vehicle 1. Other positions in/on the vehicle are also possible, for example mounted at and/or directed towards the rear, the left, and/or the right. The vision system 1 can also comprise a plurality of optical units 22 that are mounted and/or directed for example towards the rear, the left, and/or the right. The plurality of optical units 22 need not to be equivalent to each other, but may have different performances adapted to the region of the vehicle or their direction. The viewing direction of the optical unit 22 is preferably variable. A plurality of optical units 22 allows covering a wide field of view, even up to 360° around the vehicle. A plurality of optical units 22 could communicate with separate data processing devices 19, communicate with a single data processing device 19, or work with a master-slave configuration. In particular, the images recorded from the environment 5 could be used for physical calibration of the plurality of the optical units 22 to cover a large field of view.

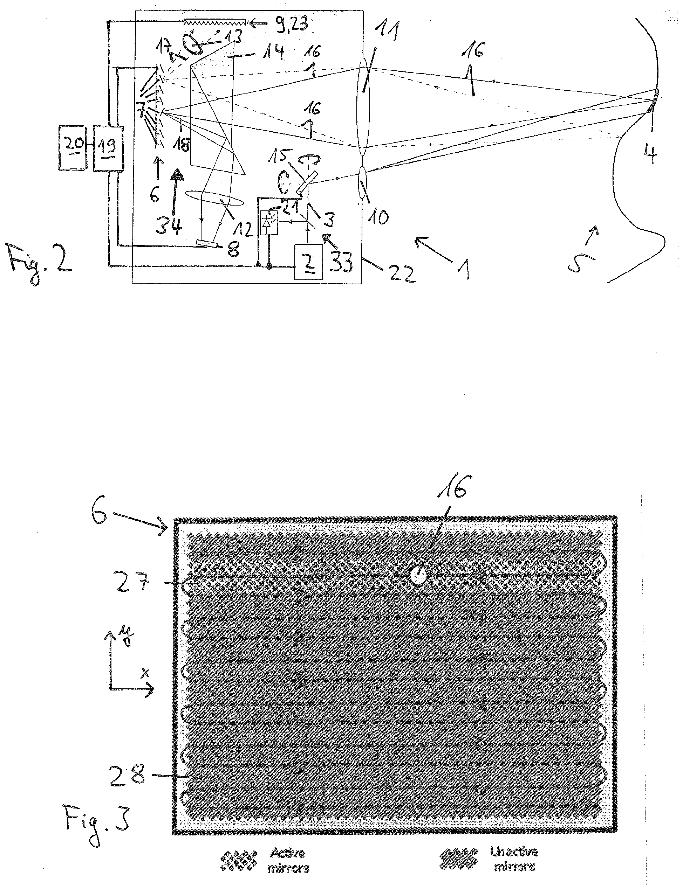

Figure 2 shows a vision system 1 in more detail. The light source 2 is arranged at an emitting side 33 and preferably comprises a laser, including laser diodes, fiber lasers, etc., such that the vision system 1 is a LIDAR system. But also other embodiments of the light source 2 are possible, e.g. LEDs, or polarized light sources of different wavebands, adapted to correspond with the recording capabilities of a light sensing device 8 and preferably a light detecting device 9. The use of a light source 2, or a plurality of light sources 2, corresponding to the sensing and detection capabilities of the vision system 1 could enable multi-specular methods, implementation of detection algorithms and/or road friction estimations. It is also possible to separate the emitting side 33 from the receiving side 34 and/or to arrange the emitting side 33 and the receiving side 34 in different units.

The light beam 3 emitted from the light source 2 is preferably divided or split, and a portion of the light beam is directed towards a sensor 21 to allow an accurate time-of-flight estimation. The sensor 21 is preferably in communication with the data processing device 19 to schedule the time-of-flight measurement. Another portion of the light beam 3 can be deflected by a MEMS device 15, a mirror, and/or other optical component through, e.g., a first system of lenses 10, which may defocus, and thereby widen, the light beam 3, towards the scanned surface 4. The MEMS device 15, mirror, a group of mirrors, a prism arrangement such as Risley prisms, and/or other optical component is adapted to be controllable by and in communication with the data processing unit 19. The MEMS device 15 preferably is adapted to be rotatable around at least two axes and/or a plurality of MEMS devices 15 is adapted to rotate around at least one axis, allowing scanning of the environment 5 of the vehicle 100. For example a first MEMS device 15 could be arranged to perform the rotation around a first axis and a second MEMS device 15 could be arranged to perform a rotation around a second axis. By means of the MEMS device 15, the light beam 3 can be directed sequentially towards points or spots on the scanned surface 4.

A portion of the light beam 3 is reflected on the scanned surface 4 or by other reflectors and/or scatterers in the environment 5, and a reflected light beam portion 16 of the light beam 3 enters the optical unit 22, e.g., by passing a second lens system 11, alternatively an entrance window. The first lens system 10 and the second lens system 11 can coincide. The light beam portion 16 travelling through the optical unit 22 is preferably directed towards a prism 14 placed in the optical path of the light beam portion 16 within the optical unit 22, allowing for optical path division and/or light deflection.

The light beam portion 16 is directed towards a light deflection device 6 comprising a plurality of light deflection elements 7, each of which is adapted to deflect the light beam portion 16 and to change the direction of the redirected light between at least a first deflection direction as a first light beam portion 18 and a second deflection direction as a second light beam portion 17. The first light beam portion 18 preferably is deflected via the prism 14, and is directed to an incident on the light sensing device 8 preferably through a third lens system 12.

Preferably, the light deflection device 6 is a DMD, i.e., a digital micro mirror device. The deflection device 6 is in communication with the data processing device 19. The data processing device 19 is adapted to control the deflection elements 7. Alternatives for the deflection device 6 to the DMD may be other active optical elements, in particular pixelated arrays (such as LCDs) or even deformable mirrors.

The optical unit 22 comprises a light intensity measurement section 23 which is adapted to perform a radiometric measurement on the second light beam portion 17. The second light beam portion 17 is preferably directed via a fourth lens system 13 towards the light intensity measurement section 23 which preferably comprises a light intensity measurement sensor separate from the light sensing device 9.

The light intensity measurement section 23 preferably comprises at least one light intensity measurement sensor, preferably a PIN photodiode, an avalanche photo diode, a single photon avalanche diode, a photomultiplier tube, either based on Silicon or InGaAs technologies, or an array of any of the aforementioned and/or is adapted to detect light in the range of UV, near infrared, short/mean/long wavelength infrared, and/or sub-mm/THz band, preferably wideband visible, and near infrared or short wavelength infrared.

In alternative embodiments outside the subject-matter of the claims, the light intensity measurement section 23 can also be located elsewhere. Preferably, the light intensity measurement section 23 comprises a plurality of light intensity measurement sensors at different positions and/or to measure different light properties, e.g., different spectral bands, for better background detection capabilities and to perform spectral and spatial differentiation. The use of active or passive optical components and/or strategies is preferred to improve the radiometric measurement. The light intensity measurement section 23 and the light source 2 may incorporate different wavelength filtering, emission, and/or sensing strategies to approach different wavelength bands.

In one embodiment not encompassed by the wording of the claims the optical unit 22 comprises a dump element. In this embodiment, the second light beam portion 17 is directed to and incident on the dump element which absorbs the second light beam portion 17 and reduces light scattering, whereas the light intensity measurement section 23 could be located elsewhere.

In another embodiment, the optical unit 22 comprises a light detecting device 9. Preferably, the light detecting device 9 is adapted to receive and acquire data, in particular image data, from the second light beam portion 17.

The data of the light detecting device 9, preferably the image data of certain pixels acquired by the light detecting device 9, could be integrated or averaged to yield a single-valued background light intensity value by radiometric measurement. In this embodiment, the light intensity measurement section 23 comprises, and/or is comprised by, the light detecting device 9.

The light detecting device 9 can comprise CCD/CMOS, focal plane arrays or polarimeters or any other area or line imaging sensor composed thereof. CCD/CMOS images may be RGB or grayscale depending on the embodiment. Polarimetric images can be in a convenient format obtained after sensing and computational analysis, which could be performed in the data processing unit 19 and/or a suitable processing device comprised in the detection device 9. Also polarization filters can be located in the optical path within the vision system, preferably in combination with a laser as light source 2 and/or a polarimeter as light detecting device 9. The light detecting device 9 can in particular comprise different sensors to detect different properties, e.g., different polarizations and/or different spectral bands. Also a light detecting device 9 with varying polarizing filters on different areas (pixels) of the light detecting device 9 is possible.

Additional optics either for laser spot filtering and/or for optimization of focusing on the light detecting device 9 and/or the light intensity measurement section 23 is possible. Electronics comprised in the deflection device 6, the light sensing device 8, the light intensity measurement section 23, and/or the light detecting device 9 could be coordinated or controlled by the data processing device 19 or firmware. Also software compensation of the background light with the data acquired by the light sensing device 8 and/or the light detecting device 9 or the adjustment the deflection device 6, the light sensing device 8, and/or the light detecting device 9 is possible.

To optimize the performance of the vision system 1 the radiometric measurement data by the light intensity measurement section 23 is preferably directed to the data processing device 19, which is adapted to perform software compensation of the background light with the data acquired by the light sensing device 8, or to adjust the deflection device 6 and/or the light sensing device 8.

The data processing device 19 can comprise a pre-processor adapted to control the capture of images, time-of-flight measurements, and/or other data by the light sensing device 8 and the light detecting device 9 and the control of the deflection device 6, receive the electrical signal containing the information from the light sensing device 8 and the light detecting device 9 and from the light deflection device 6. The pre-processor may be realized by a dedicated hardware circuit, for example a Field Programmable Gate Array (FPGA) or an Application Specific Integrated Circuit (ASIC). Alternatively the pre-processor, or part of its functions, can be realized in the data processing device 19 or a System-On-Chip (SoC) device comprising, for example, FPGA, processing device, ARM and/or microprocessor functionality.

Further image and data processing is motor carried out by corresponding software in the data processing device 19. The image and data processing in the processing unit 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one driver assistance device 20 for example depending on an estimation performed with respect to a tracked object, for example an estimated collision probability. The driver assistance device 20 may in particular comprise a display device to display information on a possibly detected object and/or on the environment of the vehicle. However, the invention is not limited to a display device. The driver assistance device 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing unit 19 can also be used as input to highly automated, piloted, and/or autonomous driving functions in a vehicle.

The data processing device 19 is preferably a digital device which is programmed or programmable and preferably comprises a microprocessor, micro-controller, digital signal processor (processing device), field programmable gate array (FPGA), or a System-On-Chip (SoC) device, and preferably has access to, or comprises, a memory device. The data processing device 19, pre-processing device and the memory device are preferably realised in an on-board electronic control unit (ECU) and may be connected to other components of the vision system 1 via a separate cable or a vehicle data bus. In another embodiment the ECU and one or more of the vision systems 1 can be integrated into a single unit, where a one box solution including the ECU and all vision systems 1 can be preferred. All steps from data acquisition, imaging, depth estimations, pre-processing, processing to possible activation or control of driver assistance device are performed automatically and continuously during driving in real time.

Figure 3 shows a scanning scheme according to an embodiment of the invention. At any given time, a sub-group 27 of the deflection elements 7 is arranged to direct light towards the light intensity measurement section 23 to perform radiometric measurements, another group 28 of deflection elements 7 is arranged to direct light elsewhere, for example onto a dump element.

Preferably, the deflection device 6 is adapted to perform an integrated sequential scan, i.e., varying groups of deflection elements 7 are chosen sequentially to form the sub-group 27 allowing radiometric measurements. Here it should be understood that there is not more than one sub-group 27 at any given time, and a plurality of sub-groups 27 arises from scanning. Advantageously, the group 27 and the group 28 of deflection elements 7 are disjoint. Preferably the sub-group 27 of deflection elements 7 used for the radiometric measurements is as rows, as for example in Figure 3. However, the sub-group 27 used for the radiometric measurements does not have to be a row. For example, the sub-group 27 could be an area of any form around the zero-order spot of the light beam portion 16, like a square, rectangle, circle etc.

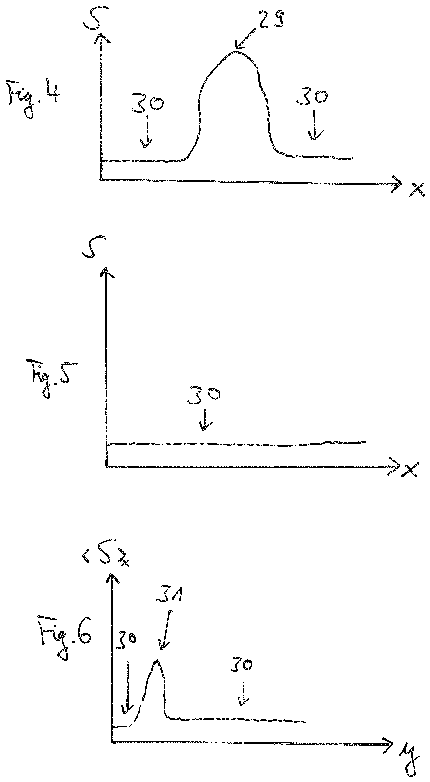

For example, a whole row of deflection elements 7 could be the group 27, i.e., deflection elements 7 with a certain y-coordinate but any x-coordinate is selected simultaneously to be the group 27. This allows the sensing of a signal summed and/or integrated over any x-coordinate yielding an x-averaged signal. In a successive measurement, the row can be moved to another y-coordinate to sense the corresponding x-averaged signal. A potential result of the x-averaged signal, <S>_x, as a function of the y-coordinate, is shown in figure 6. In a particular row or particular rows, i.e., for a particular y-value or for particular y-values, the light beam portion 16 is incident leading, for example, to a second peak 31 whereas only noise 30 from the background light is sensed in the remaining rows leading to an essentially flat signal.

Preferably, in a particular row, the zeroth order of the light beam portion 16 is incident. If said row would be scanned along the x-axis, a resulting measurement of the signal, S, potentially looks like represented in figure 4: at a certain x-coordinate and/or a set of x-coordinates, where the light beam portion 16 is incident on corresponding deflection elements 7, the S-value, i.e., the sensed signal, is large compared to the S-value at other x-coordinates, where the light beam portion 16 is not incident. The signal induced by the light beam portion 16 results in a peak 29 of the S-value as a function of the x-coordinate as shown in figure 4. At the remaining x-coordinates only noise 30 stemming from the background light is recorded.

In any row, where the light beam portion 16 is not incident, the signal is induced by background light only leading to noise 30 as schematically shown by an essentially flat S-value dependence on the x-coordinate in figure 5.

The first peak 29 and the second peak 31 correspond preferably to the zeroth order of the light beam portion 16.

If the first peak 29 and/or the second peak 31 is detected, and the group 27 is to large, the recorded signal could contain low valued S-signals from the background noise 30 leading to a low signal-to-noise ratio of the acquired average value. The data processing device 19 is preferably adapted to coordinate the deflection device 6 to decrease the range of x-values and/or y-values in order to incorporate less noise 30 into the average signal and improving the signal-to-noise ratio. If the group 27 is too small, the signal might be too weak to be sensed by the light intensity measurement section 23. In this case, the data processing device 19 is preferably adapted to coordinate the deflection device 6 to increase range of x-values and/or y-values in order to incorporate more signals from the first peak 29 and/or the second peak 31 into the average signal and improving the signal-to-noise ratio.

## Claims

1. A vision system (1) for a vehicle (100) comprising an optical unit (22) and a data processing device (19), said optical unit (22) comprising
- a light source (2) arranged on an emitting side (33), adapted to emit a light beam (3) to a scanned surface (4) in the environment (5) of the vehicle (100);
- at least one light deflection device (6) arranged on a receiving side (34) comprising an array of light deflection elements (7), wherein each light deflection element (7) is adapted to redirect light which is incident on said light deflection element (7) from the scanned surface (4), and to change the direction of the redirected light between at least a first deflection direction and a second deflection direction;
- a light sensing device (8) arranged on the receiving side (34) to sense light redirected from the light deflection device (6) in said first deflection direction;
- said data processing device (19) being adapted to process the data provided by said light sensing device (8); **characterized in that**
- said vision system (1) comprises a light intensity measurement section (23) arranged to sense light redirected from the light deflection device (6) in the second deflection direction and to perform radiometric measurement for estimation of the intensity level of background light in the scene entering the optical unit (22), wherein the intensity level of the background radiation is an overall background light intensity value; and
- the data processing device (19) is adapted to control the light deflection device (6) and/or the light sensing device (8) based on the radiometric measurement from the light intensity measurement section (23).

2. The vision system as claimed in claim 1, **characterized in that** the light intensity measurement section (23) is adapted to perform the radiometric measurement on background light lying outside the area of a light beam portion (16) directly reflected by said surface (4).

3. The vision system as claimed in any one of the preceding claims, **characterized in that** the light intensity measurement section (23) is separate from said light sensing device (8).

4. The vision system as claimed in any one of the preceding claims, **characterized in that** the light intensity measurement section (23) is formed by at least part of the light sensing device (8).

5. The vision system (1) according to any one of the preceding claims, **characterized in that** the data processing device (19) is adapted to maximize the signal-to-noise ratio of the data provided by the light sensing device (8) based on the radiometric measurement from the light intensity measurement section (23).

6. The vision system (1) according to any one of the preceding claims, **characterized in that** the data processing device (19) is adapted to reduce the downtime between successive measurements of the light sensing device (8) based on the radiometric measurement from the light intensity measurement section (23).

7. The vision system (1) according to any one of the preceding claims, **characterized in that** it further comprises a light detecting device (9) adapted to capture image data.

8. The vision system (1) according to claim 7, **characterized in that** the data processing device (19) is adapted to control the light detecting device (9) and/or to coordinate the light detecting device (9) with the deflection device (6) on the basis of the radiometric measurement from the light intensity measurement section (23).

9. The vision system (1) according to any one of the preceding claims, **characterized in that** the light source (2), the light sensing device (8), and the data processing device (19) form a LIDAR system adapted to measure time-of-flight values.

10. The vision system (1) as claimed in any one of the preceding claims, **characterized in that** the light intensity measurement section (23) is adapted to acquire image data in different spectral bands and/or with different imaging techniques, and/or the vision system (1) is adapted to perform polarimetric imaging.

11. The vision system (1) according to any one of the preceding claims, **characterized in that** the light sensing device (8) and/or the light detecting device (9) comprises avalanche photo diodes, photomultiplier tubes, single photon avalanche photodiodes, or an array of any of the aforementioned, and/or are adapted to detect light in the range of UV, near infrared, short/mean/long wavelength infrared, and/or sub-mm/THz band, preferably wideband visible, and near infrared or short wavelength infrared.

12. The vision system (1) according to claim 11, **characterized in that** the data processing device (19) is adapted to perform quenching of an avalanche photo diode comprised in the light sensing device (8) based on the radiometric measurement from the light intensity measurement section (23).

13. A vision method for a vehicle (100) comprising
- emitting a light beam (3) from a light source (2) to a scanned surface (4) in the environment (5) of the vehicle (100);
- deflecting light incident on a light deflection element (7) comprised in a light deflection device (6), wherein each light deflection element (7) redirects said incident light from the scanned surface, and changes the direction of the redirected light between at least a first deflection direction and a second deflection direction;
- sensing light redirected from the light deflection device (6) in said first deflection direction with a light sensing device (8);
- processing the data provided by the light sensing device (8) with a data processing device (19) **characterized in that**
- performing radiometric measurement for estimation of the intensity level of background light in the scene entering an optical unit (22) comprised in said vision system (1) with a light intensity measurement section (23) arranged to sense light redirected from the light deflection device (6) in the second deflection direction, wherein the intensity level of the background radiation is an overall background light intensity value; and
- controlling the light deflection device (6) and/or the light sensing device (8) with the data processing device (19) based on the radiometric measurement from the light intensity measurement section (23).

## Patentansprüche

1. Ein Sichtsystem (1) für ein Fahrzeug (100), umfassend eine optische Einheit (22) und eine Datenverarbeitungsvorrichtung (19), die optische Einheit (22) umfassend
- eine Lichtquelle (2), die auf einer Emitterseite (33) angeordnet und dazu eingerichtet ist, einen Lichtstrahl (3) auf eine gescannte Oberfläche (4) in der Umgebung (5) des Fahrzeugs (100) zu emittieren;
- mindestens eine Lichtablenkungsvorrichtung (6), die auf einer Empfängerseite (34) angeordnet ist und eine Anordnung von Lichtablenkungselementen (7) umfasst, wobei jedes Lichtablenkungselement (7) dazu eingerichtet ist, Licht, das von der gescannten Oberfläche (4) auf das Lichtablenkungselement (7) auftrifft, umzulenken und die Richtung des umgelenkten Lichts zwischen mindestens einer ersten Ablenkungsrichtung und einer zweiten Ablenkungsrichtung zu ändern;
- eine Lichterfassungsvorrichtung (8), die auf der Empfängerseite (34) angeordnet ist, um Licht zu erfassen, das von der Lichtablenkungsvorrichtung (6) in die erste Ablenkungsrichtung umgelenkt wird;
- wobei die Datenverarbeitungsvorrichtung (19) dazu eingerichtet ist, die von der Lichterfassungsvorrichtung (8) gelieferten Daten zu verarbeiten;
**dadurch gekennzeichnet, dass**
- das Sichtsystem (1) einen Lichtintensitätsmessabschnitt (23) umfasst, der so angeordnet ist, dass er das von der Lichtablenkungsvorrichtung (6) in die zweite Ablenkungsrichtung umgelenkte Licht erfasst und eine radiometrische Messung zur Abschätzung des Intensitätsniveaus des Hintergrundlichts in der in die optische Einheit (22) eintretenden Szene durchführt, wobei das Intensitätsniveau der Hintergrundstrahlung ein Gesamthintergrundlichtintensitätswert ist; und
- die Datenverarbeitungsvorrichtung (19) dazu eingerichtet ist, die Lichtablenkungsvorrichtung (6) und/oder die Lichterfassungsvorrichtung (8) auf der Grundlage der radiometrischen Messung von dem Lichtintensitätsmessabschnitt (23) zu steuern.

2. Das Sichtsystem nach Anspruch 1, **dadurch gekennzeichnet, dass** der Lichtintensitätsmessabschnitt (23) dazu eingerichtet ist, die radiometrische Messung an Hintergrundlicht durchzuführen, das außerhalb des Bereichs eines Lichtstrahlabschnitts (16) liegt, der direkt von der Oberfläche (4) reflektiert wird.

3. Das Sichtsystem nach einem der vorangehenden Ansprüche, **dadurch gekennzeichnet, dass** der Lichtintensitätsmessabschnitt (23) separat von der Lichterfassungsvorrichtung (8) ist.

4. Das Sichtsystem nach einem der vorangehenden Ansprüche, **dadurch gekennzeichnet, dass** der Lichtintensitätsmessabschnitt (23) durch mindestens einen Teil der Lichterfassungsvorrichtung (8) gebildet wird.

5. Das Sichtsystem (1) nach einem der vorangehenden Ansprüche, **dadurch gekennzeichnet, dass** die Datenverarbeitungsvorrichtung (19) dazu eingerichtet ist, das Signal-Rausch-Verhältnis der von der Lichterfassungsvorrichtung (8) gelieferten Daten auf der Grundlage der radiometrischen Messung aus dem Lichtintensitätsmessabschnitt (23) zu maximieren.

6. Das Sichtsystem (1) nach einem der vorangehenden Ansprüche, **dadurch gekennzeichnet, dass** die Datenverarbeitungsvorrichtung (19) dazu eingerichtet ist, die Ausfallzeit zwischen aufeinanderfolgenden Messungen der Lichterfassungsvorrichtung (8) auf der Grundlage der radiometrischen Messung aus dem Lichtintensitätsmessabschnitt (23) zu verringern.

7. Das Sichtsystem (1) nach einem der vorangehenden Ansprüche, **dadurch gekennzeichnet, dass** es ferner eine Lichtdetektionsvorrichtung (9) umfasst, die dazu eingerichtet ist, Bilddaten zu erfassen.

8. Das Sichtsystem (1) nach Anspruch 7, **dadurch gekennzeichnet, dass** die Datenverarbeitungsvorrichtung (19) dazu eingerichtet ist, die Lichtdetektionsvorrichtung (9) zu steuern und/oder die Lichtdetektionsvorrichtung (9) mit der Ablenkvorrichtung (6) auf der Grundlage der radiometrischen Messung aus dem Lichtintensitätsmessabschnitt (23) zu koordinieren.

9. Das Sichtsystem (1) nach einem der vorangehenden Ansprüche, **dadurch gekennzeichnet, dass** die Lichtquelle (2), die Lichterfassungsvorrichtung (8) und die Datenverarbeitungsvorrichtung (19) ein LIDAR-System bilden, das dazu eingerichtet ist, Lichtlaufzeitwerte zu messen.

10. Das Sichtsystem (1) nach einem der vorangehenden Ansprüche, **dadurch gekennzeichnet, dass** der Lichtintensitätsmessabschnitt (23) dazu eingerichtet ist, Bilddaten in verschiedenen Spektralbereichen und/oder mit verschiedenen Bildgebungsverfahren zu erfassen, und/oder das Sichtsystem (1) dazu eingerichtet ist, polarimetrische Bildgebung durchzuführen.

11. Das Sichtsystem (1) nach einem der vorhergehenden Ansprüche, **dadurch gekennzeichnet, dass** die Lichterfassungsvorrichtung (8) und/oder die Lichtdetektionsvorrichtung (9) Avalanche-Photodioden, Photomultiplier-Röhren, Einzelphotonen-Avalanche-Photodioden oder ein Array aus einem der vorgenannten umfasst und/oder dazu eingerichtet ist, Licht im Bereich des UV, des nahen Infrarots, des kurzen/mittleren/langwelligen Infrarots und/oder des Sub-mm/THz-Bands, vorzugsweise des sichtbaren Breitbands und des nahen Infrarots oder des kurzwelligen Infrarots, zu erfassen.

12. Das Sichtsystem (1) nach Anspruch 11, **dadurch gekennzeichnet, dass** die Datenverarbeitungsvorrichtung (19) dazu eingerichtet ist, das Quenchen einer Avalanche-Photodiode, die in der Lichterfassungsvorrichtung (8) enthalten ist, auf der Grundlage der radiometrischen Messung des Lichtintensitätsmessabschnitts (23) durchzuführen.

13. Ein Sichtverfahren für ein Fahrzeug (100), umfassend
- Emittieren eines Lichtstrahls (3) von einer Lichtquelle (2) auf eine gescannte Oberfläche (4) in der Umgebung (5) des Fahrzeugs (100);
- Ablenken von Licht, das auf ein Lichtablenkungselement (7) einfällt, das in einer Lichtablenkungsvorrichtung (6) enthalten ist, wobei jedes Lichtablenkungselement (7) das von der gescannten Oberfläche einfallende Licht umlenkt und die Richtung des umgelenkten Lichts zwischen mindestens einer ersten Ablenkungsrichtung und einer zweiten Ablenkungsrichtung ändert;
- Erfassen von Licht, das von der Lichtablenkungsvorrichtung (6) in der ersten Ablenkungsrichtung umgelenkt wird, mit einer Lichterfassungsvorrichtung (8);
- Verarbeiten der von der Lichterfassungsvorrichtung (8) gelieferten Daten mit einer Datenverarbeitungsvorrichtung (19)
**dadurch gekennzeichnet, dass**
- Durchführen einer radiometrischen Messung zur Abschätzung des Intensitätsniveaus von in die optische Einheit (22) eintretendem Hintergrundlicht in der Szene, wobei die optische Einheit (22) in dem Sichtsystem (1) mit einem Lichtintensitätsmessabschnitt (23) angeordnet ist, um von der Lichtablenkvorrichtung (6) in die zweite Ablenkrichtung umgelenktes Licht zu erfassen, wobei das Intensitätsniveau der Hintergrundstrahlung ein Gesamthintergrundlichtintensitätswert ist; und
- Steuern der Lichtablenkungsvorrichtung (6) und/oder der Lichterfassungsvorrichtung (8) mit der Datenverarbeitungsvorrichtung (19) basierend auf der radiometrischen Messung von dem Lichtintensitätsmessabschnitt (23).

## Revendications

1. Un système de vision (1) pour un véhicule (100) comprenant une unité optique (22) et un dispositif de traitement de données (19), ladite unité optique (22) comprenant
- une source de lumière (2) agencée sur un côté émetteur (33), conçue pour émettre un faisceau lumineux (3) vers une surface balayée (4) dans l'environnement (5) du véhicule (100) ;
- au moins un dispositif de déviation de lumière (6) agencé sur un côté récepteur (34) comprenant un réseau d'éléments de déviation de lumière (7), chaque élément de déviation de lumière (7) étant conçu pour rediriger de la lumière qui est incidente sur ledit élément de déviation de lumière (7) depuis la surface balayée (4) et pour modifier la direction de la lumière redirigée entre au moins une première direction de déviation et une seconde direction de déviation ;
- un dispositif capteur de lumière (8) agencé sur le côté récepteur (34) pour détecter de la lumière redirigée depuis le dispositif de déviation de lumière (6) dans ladite première direction de déviation ;
- ledit dispositif de traitement de données (19) étant conçu pour traiter les données fournies par ledit dispositif capteur de lumière (8) ; **caractérisé en ce que**
- ledit système de vision (1) comprend une partie de mesure d'intensité lumineuse (23) agencée pour détecter de la lumière redirigée depuis le dispositif de déviation de lumière (6) dans la seconde direction de déviation et pour réaliser une mesure radiométrique pour l'estimation du niveau d'intensité de la lumière de fond dans la scène entrant dans l'unité optique (22), le niveau d'intensité du rayonnement de fond étant une valeur d'intensité lumineuse de fond totale ; et
- le dispositif de traitement de données (19) est conçu pour commander le dispositif de déviation de lumière (6) et/ou le dispositif capteur de lumière (8) en fonction de la mesure radiométrique provenant de la partie de mesure d'intensité lumineuse (23).

2. Le système de vision selon la revendication 1, **caractérisé en ce que** la partie de mesure d'intensité lumineuse (23) est conçue pour réaliser la mesure radiométrique sur de la lumière de fond située en dehors de la zone d'une portion de faisceau lumineux (16) directement réfléchie par ladite surface (4).

3. Le système de vision selon l'une quelconque des revendications précédentes, **caractérisé en ce que** la partie de mesure d'intensité lumineuse (23) est séparée dudit dispositif capteur de lumière (8).

4. Le système de vision selon l'une quelconque des revendications précédentes, **caractérisé en ce que** la partie de mesure d'intensité lumineuse (23) est formée par au moins une partie du dispositif capteur de lumière (8).

5. Le système de vision (1) selon l'une quelconque des revendications précédentes, **caractérisé en ce que** le dispositif de traitement de données (19) est conçu pour maximiser le rapport signal sur bruit des données fournies par le dispositif capteur de lumière (8) en fonction de la mesure radiométrique provenant de la partie de mesure d'intensité lumineuse (23).

6. Le système de vision (1) selon l'une quelconque des revendications précédentes, **caractérisé en ce que** le dispositif de traitement de données (19) est conçu pour réduire le temps d'indisponibilité entre des mesures successives du dispositif capteur de lumière (8) en fonction de la mesure radiométrique provenant de la partie de mesure d'intensité lumineuse (23).

7. Le système de vision (1) selon l'une quelconque des revendications précédentes, **caractérisé en ce qu'**il comprend en outre un dispositif détecteur de lumière (9) conçu pour capturer des données d'image.

8. Le système de vision (1) selon la revendication 7, **caractérisé en ce que** le dispositif de traitement de données (19) est conçu pour commander le dispositif détecteur de lumière (9) et/ou pour coordonner le dispositif détecteur de lumière (9) et le dispositif de déviation (6) en fonction de la mesure radiométrique provenant de la partie de mesure d'intensité lumineuse (23).

9. Le système de vision (1) selon l'une quelconque des revendications précédentes, **caractérisé en ce que** la source de lumière (2), le dispositif capteur de lumière (8) et le dispositif de traitement de données (19) forment un système LIDAR conçu pour mesurer des valeurs de temps de vol.

10. Le système de vision (1) selon l'une quelconque des revendications précédentes, **caractérisé en ce que** la partie de mesure d'intensité lumineuse (23) est conçue pour acquérir des données d'image dans différentes bandes spectrales et/ou avec différentes techniques d'imagerie, et/ou le système de vision (1) est conçu pour réaliser une imagerie polarimétrique.

11. Le système de vision (1) selon l'une quelconque des revendications précédentes, **caractérisé en ce que** le dispositif capteur de lumière (8) et/ou le dispositif détecteur de lumière (9) comprend des photodiodes à avalanche, des tubes photomultiplicateurs, des photodiodes à avalanche monophotoniques, ou un réseau d'un des éléments susmentionnés, et/ou sont conçus pour détecter de la lumière dans le domaine UV, proche infrarouge, infrarouge à ondes courtes/moyennes/longues et/ou la bande submillimétrique/THz, de préférence visible à large bande, et proche infrarouge ou infrarouge à ondes courtes.

12. Le système de vision (1) selon la revendication 11, **caractérisé en ce que** le dispositif de traitement de données (19) est conçu pour réaliser une extinction d'une photodiode à avalanche comprise dans le dispositif capteur de lumière (8) en fonction de la mesure radiométrique provenant de la partie de mesure d'intensité lumineuse (23).

13. Un procédé de vision pour un véhicule (100) comprenant
- l'émission d'un faisceau lumineux (3) depuis une source de lumière (2) vers une surface balayée (4) dans l'environnement (5) du véhicule (100) ;
- la déviation de lumière incidente sur un élément de déviation de lumière (7) compris dans un dispositif de déviation de lumière (6), chaque élément de déviation de lumière (7) redirigeant ladite lumière incidente depuis la surface balayée et modifiant la direction de la lumière redirigée entre au moins une première direction de déviation et une seconde direction de déviation ;
- la détection de lumière redirigée depuis le dispositif de déviation de lumière (6) dans ladite première direction de déviation, au moyen d'un dispositif capteur de lumière (8) ;
- le traitement des données fournies par le dispositif capteur de lumière (8), au moyen d'un dispositif de traitement de données (19),
**caractérisé en ce que**
- la réalisation d'une mesure radiométrique pour l'estimation du niveau d'intensité de la lumière de fond dans la scène entrant dans une unité optique (22) comprise dans ledit système de vision (1) au moyen d'une partie de mesure d'intensité lumineuse (23) agencée pour détecter de la lumière redirigée depuis le dispositif de déviation de lumière (6) dans la seconde direction de déviation, le niveau d'intensité du rayonnement de fond étant une valeur d'intensité lumineuse de fond totale ; et
- la commande du dispositif de déviation de lumière (6) et/ou du dispositif capteur de lumière (8), au moyen du dispositif de traitement de données (19), en fonction de la mesure radiométrique provenant de la partie de mesure d'intensité lumineuse (23).
